# EUROPEAN PATENT APPLICATION

(11) **EP 4 580 150 A1**
(43) Date of publication of application: **02.07.2025**
(21) Application number: 23864372.0
(22) Date of filing: 29.05.2023
(51) Int. Cl.: H04L 45/00

(54) **BIT INDEX ROUTING TABLE ESTABLISHMENT METHOD, NETWORK DEVICE, AND STORAGE MEDIUM**

(30) Priority: 15.09.2022 CN 202211122862
(71) Applicant: ZTE Corporation, Shenzhen, Guangdong 518057 (CN)
(72) Inventor: CHEN, Ran, Shenzhen, Guangdong 518057 (CN); XU, Benchong, Shenzhen, Guangdong 518057 (CN)
(74) Representative: Savi, Massimiliano
(86) International application number: PCT/CN2023/096864
(87) International publication number: WO 2024/055633

(57) **Abstract**

The present application provides a bit index routing table establishment method, a network device, and a storage medium. The method comprises: receiving mapping information advertised by a bit forwarding router in a bit index explicit replication network domain, wherein the mapping information is used for representing a mapping relationship between target identifier information and a target network resource dividing identifier, and according to the mapping information, establishing a bit index routing table corresponding to the target network resource dividing identifier, wherein the bit forwarding router forwards a packet on the basis of a bit index forwarding table haying slice granularity.

## Description

### CROSS-REFERENCE TO RELATED APPLICATION

The present disclosure is filed on the basis of Chinese patent application No. 202211122862.2 filed September 15, 2022, and claims priority of the Chinese patent application, the entire contents of which are incorporated herein by reference.

### TECHNICAL FIELD

Embodiments of the present disclosure relate to, but are not limited to, the technical field of communications, and in particular, to a bit index routing table establishment method, a network device, and a storage medium.

### BACKGROUND

In network communications, the Bit Index Explicit Replication (BIER) technology is a new multicast technology that encapsulates a set of multicast packets to be sent to a destination node in the form of a Bit String (BS) in a packet header for transmission. In a BIER domain, an intermediate node of a network does not need to establish a multicast tree or save a multicast flow state for each multicast flow (Per-flow), but only needs to perform replication and forwarding according to a set of destination nodes in the packet header. Therefore, this technology can greatly reduce the protocol complexity of an intermediate network and can easily realize the transmission of multicast traffic in the intermediate network, so there is no need for the intermediate network to record any multicast traffic state, greatly simplifying the operation and maintenance of the network.

At present, various 5G bearer network slicing technologies have been proposed in related technologies, such as an Interior Gateway Protocol (IGP) multi-topology technology, which is utilized to divide the same physical network topology into a plurality of logical sub-topologies, and assign different overlay services to different logical sub-topologies; alternatively, an IGP flexible algorithm (Flex-algorithm) technology, which is utilized to run a plurality of IGP algorithms in the same topology to obtain a plurality of Flex-algorithm planes through calculation, and iterate different overlay services to different Flex-algorithm planes; alternatively, a slice aggregation (SA) technology, that is, an underlay topology that may be a physical topology, a Flex-algorithm, or a multi-topology, which is utilized to divide the same physical network topology or logical topology into a plurality logical sub-topologies, and advertise overlay services based on each slice aggregation or each Segment Identifier (SID) through control planes. However, the multi-topology technology, the Flex-algorithm technology and the SA technology are all specific ways to implement slicing functions in Internet Protocol (IP)/Multi-Protocol Label Switching (MPLS) networks. However, in a BIER network, a scheme for transmitting data in the form of slices is still imperfect. For example, even if each Flex-algorithm is assigned a Bit Forwarding Router-Identifier (BFR-ID), or each network slice is assigned a Bit Index Routing Table-Identifier (BIRT-ID), a bit forwarding router still cannot find the next hop information within a specific slice when forwarding data, and thus cannot transmit data. In addition, for a Bit Index Explicit Replication-Traffic Engineering (BIER-TE) network, there has been no research on how to transmit data in the form of slices so far.

### SUMMARY

In accordance with an embodiment of the present disclosure, a bit index routing table establishment method, a network device and a storage medium are provided, which may transmit data in the form of slices in a BIER network.

In accordance with an aspect of an embodiment of the present disclosure, a bit index routing table establishment method is provided, including: receiving mapping information advertised by a bit forwarding router in a bit index explicit replication network domain, where the mapping information is configured to characterize a mapping relationship between target identifier information and a target network resource partition identifier; and establishing a bit index routing table corresponding to the target network resource partition identifier according to the mapping information.

In accordance with another aspect of an embodiment of the present disclosure, a bit index routing table establishment method is provided, including: advertising mapping information in a bit index explicit replication network domain, such that a bit forwarding router in the bit index explicit replication network domain establishes a bit index routing table corresponding to a target network resource partition identifier according to the mapping information, where the mapping information is configured to characterize a mapping relationship between target identifier information and the target network resource partition identifier.

In accordance with yet another aspect of an embodiment of the present disclosure, a network device is further provided, including a memory, a processor, and computer program stored in the memory and runnable on the processor, where the processor implements the bit index routing table establishment method as described above when executing the computer program.

In accordance with still another aspect of an embodiment of the present disclosure, a computer-readable storage medium storing computer-executable instructions is further provided, where the computer-executable instructions are configured to perform the bit index routing table establishment method as described above.

In accordance with still another aspect of an embodiment of the present disclosure, a computer program product is further provided, the computer program product may include computer program or computer instructions stored in a computer-readable storage medium, a processor of a computer device reads the computer program or the computer instruction from the computer-readable storage medium, and executes the computer program or the computer instruction to cause the computer device to perform the bit index routing table establishment method as described above.

An embodiment of the present disclosure includes: a bit forwarding router receives mapping information advertised by a bit forwarding router in a bit index explicit replication network domain first, where the mapping information is configured to characterize a mapping relationship between target identifier information and a target network resource partition identifier, and then establishes a bit index routing table corresponding to the target network resource partition identifier according to the mapping information, where the bit forwarding router forwards a packet on the basis of a bit index forwarding table having slice granularity. Therefore, according to the embodiment of the present disclosure, data may be transmitted in the form of slices in a BIER network.

### BRIEF DESCRIPTION OF DRAWINGS

Fig. 1 is a flowchart of a bit index routing table establishment method provided by an embodiment of the present disclosure;
Fig. 2 is a schematic diagram of a first router advertisement message provided by a specific example of the present disclosure;
Fig. 3 is a schematic diagram of a first router advertisement message provided by another specific example of the present disclosure;
Fig. 4 is a schematic diagram of a first router advertisement message provided by another specific example of the present disclosure;
Fig. 5 is a flowchart of a bit index routing table establishment method provided by another embodiment of the present disclosure;
Fig. 6 is a structural schematic diagram of a network slice provided by a specific example of the present disclosure; and
Fig. 7 is a structural schematic diagram of a network device provided by an embodiment of the present disclosure.

### DETAILED DESCRIPTION

In order to make the objectives, technical solutions and advantages of the present disclosure clearer, the present disclosure will be further described in detail below in conjunction with the accompanying drawings and embodiments. It should be understood that the specific embodiments described herein are only used to explain the present disclosure and are not used to limit the present disclosure.

It should be noted that although a logical order is shown in the flowchart, in some cases, the steps shown or described may be performed in an order different from that in the flowchart. In the description of the Specification, Claims and above-mentioned drawings, terms such as "a plurality of (or multiple)" means more than two, "greater than", "less than", "exceed", and the like are understood as excluding the specified number, and words such as "above", "below", "within", and the like are understood as including the specified number. Words such as "first", "second", and the like are only used for the purpose of distinguishing technical features and cannot be understood as indicating or implying relative importance or implicitly indicating the number of the indicated technical features or implicitly indicating the order of the indicated technical features.

An embodiment of the present disclosure includes: a bit forwarding router receives mapping information advertised by a bit forwarding router in a bit index explicit replication network domain first, where the mapping information is configured to characterize a mapping relationship between target identifier information and a target network resource partition identifier, and then establishes a bit index routing table corresponding to the target network resource partition identifier according to the mapping information, where the bit forwarding router forwards a packet on the basis of a bit index forwarding table having slice granularity. Therefore, according to the embodiment of the present disclosure, data may be transmitted in the form of slices in a BIER network.

The embodiments of the present disclosure will be further described below in conjunction with the accompanying drawings.

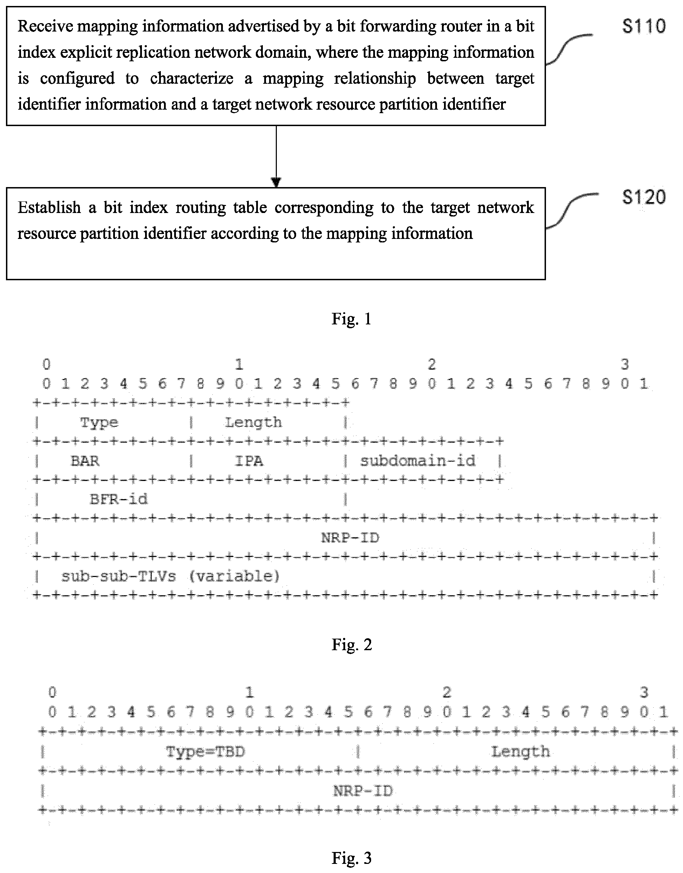

Referring to Fig. 1, which is a flowchart of a bit index routing table establishment method provided by an embodiment of the present disclosure. The bit index routing table establishment method may include but is not limited to step S110 and step S120.

In the step of S110, mapping information advertised by a bit forwarding router in a bit index explicit replication network domain is received, where the mapping information is configured to characterize a mapping relationship between target identifier information and a target network resource partition identifier.

In a feasible implementation, the target identifier information may include any one of a Bit Forwarding Router-Identifier (BFR-id), a bit index explicit replication sub-domain-identifier or a bit index forwarding table-identifier. When the bit index explicit replication network domain is a Bit Index Explicit Replication-Traffic Engineering (BIER-TE) network domain, the target identifier information may include any one of a bit index explicit replication sub-domain-identifier, a bit index forwarding table-identifier or a bit position, where the Bit Index Forwarding Table-Identifier (BIFT-ID) is an identifier of a Bit Index Forwarding Table (BIFT), and the BIFT-ID is configured to instruct a bit forwarding router to search for a corresponding BIFT to forward a BIER packet.

It should be appreciated that the Bit Forwarding Router (BFR) includes a Bit Forwarding Ingress Router (BFIR), an intermediate bit forwarding router (i.e., a Transit BFR) and a Bit Forwarding Egress Router (BFER), where only the bit forwarding ingress router and the bit forwarding egress router need to be assigned unique bit forwarding router-identifiers for identification, and the intermediate bit forwarding router does not need to be assigned a bit forwarding router-identifier for identification.

In a feasible implementation, the target network resource partition identifier may be any one of a slice-identifier, a slice aggregation-identifier, a network resource partition identifier, a multi-topology-identifier or a flexible algorithm-identifier, which will not be specifically limited herein.

In the step of S120, a bit index routing table corresponding to the target network resource partition identifier is established according to the mapping information.

In a feasible implementation, the Bit Index Routing Table (BIRT) may further include BIER information and other information, where the BIER information includes BIER sub-domain (SD), Bit String Length (BSL), target identifier information, Set Identifier (SI), BFR-prefix and other information, where the BIER sub-domain may be divided into a plurality of subsets and identified by the SI, and the SI may be calculated according to BFR-ID and BSL. Specifically, when the BSL used in one BIER sub-domain is not sufficient to represent the maximum value of the BFR-ID configured in the sub-domain, a bit string needs to be divided into different sets, each of which is identified by the SI. For example, assuming that the maximum value of the BFR-ID in the BIER sub-domain is 1024, if the BSL is set to 256, the BIER sub-domain needs to be divided into four sets, namely SI 0, SI 1, SI 2 and SI 3, which will not be specifically limited herein.

It should be appreciated that a slice-based bit index routing table is a table that is mapped from a forwarding router identifier of the bit forwarding egress router to a BFR-prefix of the bit forwarding egress router within a specific slice, and mapped to a BFR-Neighbor (BFR-NBR) on a path reaching the bit forwarding egress router. Therefore, the slice-based bit index routing table describes a corresponding relationship between the BFR-prefix and the BFR-NBR within the specific slice, which may be configured to guide the forwarding of the BIER packet in the BIER sub-domain within the specific slice.

In an embodiment, bit index routing tables with the same SI and the same BFR-NBR within a specific slice may be integrated to obtain a slice-based bit index forwarding table, and a mapping relationship between a Forwarding-Bit Mask (F-BM) and the BFR-NBR within the slice may be established using the bit index forwarding table, where the F-BM represents a set of BIER domain edge nodes that may be reached through the BFR-NBR when replicating and sending a packet to the next hop BFR-NBR. In addition, in the bit index explicit replication network domain, each bit forwarding egress router corresponds to a bit position, the bit position being globally unique in a BIER sub-domain within a specific slice. The bit positions of all bit forwarding egress routers form a bit string, and the transmission and routing of a BIER packet in the bit index explicit replication network domain depend on the bit string. When receiving a BIER packet header containing BIER information and/or a target network resource partition identifier, other bit forwarding routers forward the BIER packet using the slice-based bit index forwarding table.

In this embodiment, by using the bit index routing table establishment method including the above-mentioned steps S110 to S120, a bit forwarding router may receive mapping information advertised by a bit forwarding router in a bit index explicit replication network domain first, where the mapping information is configured to characterize a mapping relationship between target identifier information and a target network resource partition identifier, and then may establish a bit index routing table corresponding to the target network resource partition identifier according to the mapping information, where the bit forwarding router forwards a packet on the basis of a bit index forwarding table having slice granularity. Therefore, according to the embodiment of the present disclosure, data may be transmitted in the form of slices in a BIER network.

In an embodiment, the mapping information may be advertised by the bit forwarding router in the bit index explicit replication network domain through a first router advertisement message, where the first router advertisement message may be an Intermediate System to Intermediate System (ISIS)-based router advertisement message, may be an Open Shortest Path First (OSPF)-based router advertisement message, or may be a Border Gateway Protocol (BGP)-based router advertisement message. When a target protocol type is an OSPF type, the target protocol type may be an OSPF version 2 (i.e., OSPFv2) or may be an OSPF version 3 (i.e., OSPFv3), which will not be specifically limited herein.

**Table 1**

| Field Name | Field Meaning |
|---|---|
| Type | Type of Sub-TLV |
| Length | Packet length |
| BAR | Representing a BIER algorithm, configured to calculate an underlay path to reach other BFRs |
| IPA | Representing an IGP algorithm, configured to modify, enhance, or replace the calculation of a reference underlay path to reach other BFRs defined by BAR values |
| BFR-id | Representing a bit forwarding router-identifier |
| NRP-ID | Representing a target network resource partition identifier |
| Sub-domain-id | A value that uniquely identifies a BIER sub-domain |
| sub-sub-TLVs(variable) | Representing different BIER encapsulation types |

In an embodiment, when the first router advertisement message is an ISIS-based router advertisement message, the first router advertisement message includes an NRP BIER Info-Sub-TLV, the mapping information is carried in the NRP BIER Info-Sub-TLV, and the NRP BIER Info-Sub-TLV is borne in an ISIS prefix-reachability TLV. For example, as shown in Fig. 2, Fig. 2 is a schematic diagram of a first router advertisement message, and the mapping information in this embodiment refers to a mapping relationship between the BFR-id and the target network resource partition identifier NRP-ID, where the field length of each of Type, Length, BAR, IPA and Sub-Domain-ID may be 1 byte (i.e. 8 bits), the field length of BFR-id may be 2 bytes, the field length of NRP-ID may be 4 bytes, 3 bytes or 1 byte, and the field length of sub-sub-TLVs is a variable length. In addition, the field meanings of all fields in Fig. 2 are shown in Table 1, where the BIER encapsulation types may be Multi-Protocol Label Switching (MPLS) types, non-MPLS types, or other encapsulation types, the type of sub-sub-TLVs may be an NRP BIER Info-Sub-TLV, and the target network resource partition identifier NRP-ID may be any one of a slice-identifier, a slice aggregation-identifier, a network resource partition identifier, a multi-topology-identifier or a flexible algorithm-identifier.

In another embodiment, when the first router advertisement message is an ISIS-based router advertisement message, the first router advertisement message includes a BIER Info-Sub-TLV, and the mapping information is carried in the BIER Info-Sub-TLV. Specifically, in this embodiment, the mapping information refers to a mapping relationship between the BIFT ID and/or the bit forwarding router-identifier and/or the bit index explicit replication sub-domain-identifier and the target network resource partition identifier. The first router advertisement message further includes an NRP Sub-sub-TLV, the target network resource partition identifier is carried in the NRP Sub-sub-TLV, the NRP Sub-sub-TLV is borne in a BIER Info-Sub-TLV, and the BIFT ID and/or the bit forwarding router-identifier and/or the bit index explicit replication sub-domain-identifier are carried in the BIER Info-Sub-TLV. For example, as shown in Fig. 3, Fig. 3 is a schematic diagram of another first router advertisement message, where Type is To Be Defined (TBD), the field length of each of Type and Length may be 2 bytes (i.e., 16 bits), and the field length of NRP-ID may be 4 bytes, 3 bytes, or 1 byte. In addition, the field meanings of Type, Length and NRP-ID are as shown in Table 1, where the target network resource partition identifier NRP-ID may be any one of a slice-identifier, a slice aggregation-identifier, a network resource partition identifier, a multi-topology-identifier or a flexible algorithm-identifier.

Based on the above embodiments, in an embodiment, if slice-identifiers are allocated based on each BIFT-ID, then in a BIER-MPLS encapsulation scenario, when the first router advertisement message is an ISIS-based router advertisement message, the first router advertisement message may include an NRP sub-sub-sub-TLV, the target network resource partition identifier is carried in the NRP sub-sub-sub-TLV, the NRP sub-sub-sub-TLV is borne in a sub-sub-sub-TLV, and the sub-sub-sub-TLV is borne in a BIER MPLS Encapsulation Extended Sub-sub-TLV, where the target network resource partition identifier NRP-ID may be any one of a slice-identifier, a slice aggregation-identifier, a network resource partition identifier, a multi-topology-identifier or a flexible algorithm-identifier.

In another embodiment, taking the allocation of slice-identifiers based on each BIFT-ID as an example, in a BIER-non-MPLS encapsulation scenario, when the first router advertisement message is an ISIS-based router advertisement message, the first router advertisement message may include an NRP sub-sub-sub-TLV, the target network resource partition identifier is carried in the NRP sub-sub-sub-TLV, the NRP sub-sub-sub-TLV is borne in a sub-sub-sub-TLV, and the sub-sub-sub-TLV is borne in an IS-IS BIER non-MPLS Encapsulation Sub-sub TLV, where the target network resource partition identifier NRP-ID may be any one of a slice-identifier, a slice aggregation-identifier, a network resource partition identifier, a multi-topology-identifier or a flexible algorithm-identifier.

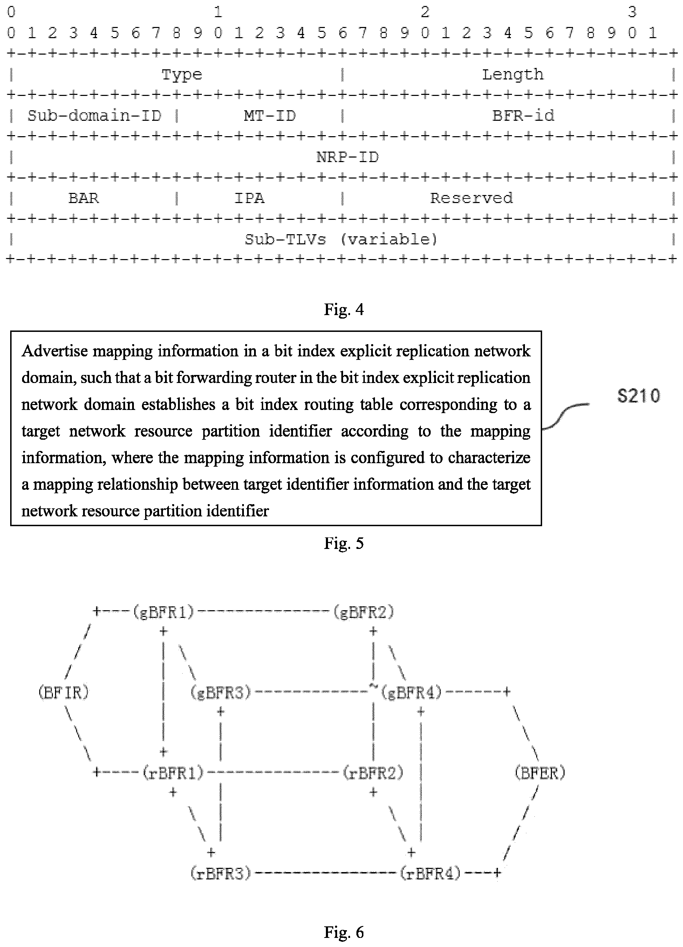

In an embodiment, when the first router advertisement message is an OSPF-based router advertisement message, the first router advertisement message may include an NRP BIER Sub-TLV, and the mapping information is carried in the NRP BIER Sub-TLV, where when the OSPF protocol is an OSPFv2 protocol, the NRP BIER Sub-TLV may be borne in an OSPFv2 Extended Prefix TLV, and when the OSPF protocol is an OSPFv3 protocol, the NRP BIER Sub-TLV may be borne in an Intra-Area-Prefix TLV or an Inter-Area-Prefix TLV; alternatively, the first router advertisement message includes an NRP Sub-TLV, and the mapping information is carried in the NRP Sub-TLV. For example, as shown in Fig. 4, Fig. 4 is a schematic diagram of another first router advertisement message, where Reserved represents a reserved field used for byte alignment; MT-ID represents a multi-topology-identifier, where each BIER sub-domain must be associated with one and only one OSPF topology identified by MT-ID; Sub-TLVs represent different BIER encapsulation types, and a Sub-TLV of one BIER may carry a plurality of different sub-sub-TLVs. The field meanings of other fields are as shown in Table 1. In addition, the target network resource partition identifier NRP-ID may be any one of a slice-identifier, a slice aggregation-identifier, a network resource partition identifier, a multi-topology-identifier or a flexible algorithm-identifier.

In another embodiment, when the first router advertisement message is an OSPF-based router advertisement message, the first router advertisement message includes a BIER Sub-TLV, and the mapping information is carried in the BIER Sub-TLV. In addition, the first router advertisement message includes an NRP Sub-TLV, the target network resource partition identifier is carried in the NRP Sub-TLV, and the NRP Sub-TLV is borne in a BIER Sub-TLV, where the target network resource partition identifier may be any one of a slice-identifier, a slice aggregation-identifier, a network resource partition identifier, a multi-topology-identifier or a flexible algorithm-identifier.

In an embodiment, taking the allocation of slice-identifiers based on each BIFT-ID as an example, in a BIER-MPLS encapsulation scenario, when the first router advertisement message is an OSPF-based router advertisement message, the first router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER MPLS Encapsulation Sub-TLV, where the target network resource partition identifier may be any one of a slice-identifier, a slice aggregation-identifier, a network resource partition identifier, a multi-topology-identifier or a flexible algorithm-identifier.

In another embodiment, taking the allocation of slice-identifiers based on each BIFT-ID as an example, in a BIER-non-MPLS encapsulation scenario, when the first router advertisement message is an OSPF-based router advertisement message, the first router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in an OSPFv2/OSPFv3 BIER non-MPLS Encapsulation Sub-TLV, where the target network resource partition identifier may be any one of a slice-identifier, a slice aggregation-identifier, a network resource partition identifier, a multi-topology-identifier or a flexible algorithm-identifier.

In an embodiment, when the first router advertisement message is a BGP-based router advertisement message, the first router advertisement message includes a BIER TLV, and the mapping information is carried in the BIER TLV. Specifically, the first router advertisement message includes an NRP Sub-TLV, the target network resource partition identifier is carried in the NRP Sub-TLV, and the NRP Sub-TLV is borne in a BIER TLV, where the target network resource partition identifier may be any one of a slice-identifier, a slice aggregation-identifier, a network resource partition identifier, a multi-topology-identifier or a flexible algorithm-identifier.

In an embodiment, taking the allocation of slice-identifiers based on each BIFT-ID as an example, in a BIER-MPLS encapsulation scenario, when the first router advertisement message is a BGP-based router advertisement message, the first router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER MPLS Encapsulation Sub-TLV, where the target network resource partition identifier may be any one of a slice-identifier, a slice aggregation-identifier, a network resource partition identifier, a multi-topology-identifier or a flexible algorithm-identifier.

In another embodiment, taking the allocation of slice-identifiers based on each BIFT-ID as an example, in a BIER-non-MPLS encapsulation scenario, when the first router advertisement message is a BGP-based router advertisement message, the first router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER non-MPLS Encapsulation sub-TLV, where the target network resource partition identifier may be any one of a slice-identifier, a slice aggregation-identifier, a network resource partition identifier, a multi-topology-identifier or a flexible algorithm-identifier.

In an embodiment, when the bit index explicit replication network domain is a Bit Index Explicit Replication-Traffic Engineering (BIER-TE) network domain, the mapping information may be advertised by the bit forwarding router in the BIER-TE network domain through a second router advertisement message, where BIER-TE may be BIET tree engineering or BIER traffic engineering; the second router advertisement message may be an ISIS-based router advertisement message, may be an OSPF-based router advertisement message, or may be a BGP-based router advertisement message. When a target protocol type is an OSPF type, the target protocol type may be an OSPF version 2 (i.e., OSPFv2) or may be an OSPF version 3 (i.e., OSPFv3), which will not be specifically limited herein.

In an embodiment, when the second router advertisement message is an ISIS-based router advertisement message, the second router advertisement message includes a BIER-TE Info Sub-TLV, and the mapping information is carried in the BIER-TE Info Sub-TLV. If slice-identifiers are allocated based on each BIFT-ID, then in a BIER-MPLS encapsulation scenario, the second router advertisement message includes an NRP sub-sub-sub-TLV, the target network resource partition identifier is carried in the NRP sub-sub-sub-TLV, the NRP sub-sub-sub-TLV is borne in a sub-sub-sub-TLV, and the sub-sub-sub-TLV is borne in a BIER-TE MPLS Encapsulation Extended Sub-sub-TLV; and if slice-identifiers are allocated based on each BIFT-ID, then in a BIER-non-MPLS encapsulation scenario, the second router advertisement message includes an NRP sub-sub-sub-TLV, the target network resource partition identifier is carried in the NRP sub-sub-sub-TLV, the NRP sub-sub-sub-TLV is borne in a sub-sub-sub-TLV, and the sub-sub-sub-TLV is borne in an IS-IS BIER-TE non-MPLS Encapsulation Sub-sub TLV, where the target network resource partition identifier may be any one of a slice-identifier, a slice aggregation-identifier, a network resource partition identifier, a multi-topology-identifier or a flexible algorithm-identifier.

In another embodiment, when the second router advertisement message is an ISIS-based router advertisement message, the second router advertisement message includes a BIER-TE Info Sub-TLV, and the mapping information is carried in the BIER-TE Info Sub-TLV. In addition, the second router advertisement message further includes an NRP sub-sub-TLV, the target network resource partition identifier is carried in the NRP sub-sub-TLV, and the NRP sub-sub-TLV is borne in a BIER-TE Info Sub-TLV, where the target network resource partition identifier may be any one of a slice-identifier, a slice aggregation-identifier, a network resource partition identifier, a multi-topology-identifier or a flexible algorithm-identifier.

In an embodiment, when the second router advertisement message is an OSPF-based router advertisement message, the second router advertisement message includes a BIER-TE Sub-TLV, and the mapping information is carried in the BIER-TE Sub-TLV. If slice-identifiers are allocated based on each BIFT-ID, then in a BIER-MPLS encapsulation scenario, the second router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER-TE MPLS Encapsulation Sub-TLV; and if slice-identifiers are allocated based on each BIFT-ID, then in a BIER-non-MPLS encapsulation scenario, the second router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in an OSPFv2/OSPFv3 BIER-TE non-MPLS Encapsulation Sub-TLV, where the target network resource partition identifier may be any one of a slice-identifier, a slice aggregation-identifier, a network resource partition identifier, a multi-topology-identifier or a flexible algorithm-identifier.

In another embodiment, when the second router advertisement message is an OSPF-based router advertisement message, the second router advertisement message includes a BIER-TE Sub-TLV, and the mapping information is carried in the BIER-TE Sub-TLV. Specifically, the second router advertisement message further includes an NRP sub-sub-sub-TLV, the target network resource partition identifier is carried in the NRP sub-sub-sub-TLV, the NRP sub-sub-sub-TLV is borne in a sub-sub-sub-TLV, and the sub-sub-sub-TLV is borne in a BIER-TE Sub-TLV, where the target network resource partition identifier may be any one of a slice-identifier, a slice aggregation-identifier, a network resource partition identifier, a multi-topology-identifier or a flexible algorithm-identifier.

In an embodiment, when the second router advertisement message is a BGP-based router advertisement message, the second router advertisement message includes a BIER-TE TLV, and the mapping information is carried in the BIER-TE TLV. If slice-identifiers are allocated based on each BIFT-ID, then in a BIER-MPLS encapsulation scenario, the second router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER MPLS Encapsulation Sub-TLV; and if slice-identifiers are allocated based on each BIFT-ID, then in a BIER-non-MPLS encapsulation scenario, the second router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER non-MPLS Encapsulation Sub-TLV, where the target network resource partition identifier may be any one of a slice-identifier, a slice aggregation-identifier, a network resource partition identifier, a multi-topology-identifier or a flexible algorithm-identifier.

In another embodiment, when the second router advertisement message is a BGP-based router advertisement message, the second router advertisement message includes a BIER-TE TLV, and the mapping information is carried in the BIER-TE TLV. Specifically, the second router advertisement message may further include an NRP sub-TLV, the target network resource partition identifier is carried in the NRP sub-TLV, and the NRP sub-TLV is borne in a BIER-TE TLV, where the target network resource partition identifier may be any one of a slice-identifier, a slice aggregation-identifier, a network resource partition identifier, a multi-topology-identifier or a flexible algorithm-identifier.

Referring to Fig. 5, which is a flowchart of a bit index routing table establishment method provided by another embodiment of the present disclosure. The bit index routing table establishment method may include but is not limited to step S210 and step S220.

In the step of S210, mapping information is advertised in a bit index explicit replication network domain, such that a bit forwarding router in the bit index explicit replication network domain establishes a bit index routing table corresponding to a target network resource partition identifier according to the mapping information, where the mapping information is configured to characterize a mapping relationship between target identifier information and the target network resource partition identifier.

In a feasible implementation, the target identifier information may include any one of a bit forwarding router-identifier, a bit index explicit replication sub-domain-identifier or a bit index forwarding table-identifier. When the bit index explicit replication network domain is a BIER-TE network domain, the target identifier information may include any one of a bit index explicit replication sub-domain-identifier, a bit index forwarding table-identifier or a bit position, where the bit index forwarding table-identifier is an identifier of a bit index forwarding table, and the bit index forwarding table-identifier is configured to instruct a bit forwarding router to search for a corresponding BIFT to forward a BIER packet.

It should be appreciated that the bit forwarding router includes a bit forwarding ingress router, an intermediate bit forwarding router and a bit forwarding egress router, where in a BIER network, only the bit forwarding ingress router and the bit forwarding egress router need to be assigned unique bit forwarding router-identifiers for identification, and the intermediate bit forwarding router does not need to be assigned a bit forwarding router-identifier for identification.

In a feasible implementation, the target network resource partition identifier may be any one of a slice-identifier, a slice aggregation-identifier, a network resource partition identifier, a multi-topology-identifier or a flexible algorithm-identifier, which will not be specifically limited herein.

In a feasible implementation, the bit index routing table may further include BIER information and other information, where the BIER information includes BIER sub-domain, BSL, target identifier information, SI, BFR-prefix and other information, where the BIER sub-domain may be divided into a plurality of subsets and identified by the SI, and the SI may be calculated according to BFR-ID and BSL. Specifically, when the BSL used in one BIER sub-domain is not sufficient to represent the maximum value of the BFR-ID configured in the sub-domain, a bit string needs to be divided into different sets, each of which is identified by the SI. For example, assuming that the maximum value of the BFR-ID in the BIER sub-domain is 1024, if the BSL is set to 256, the BIER sub-domain needs to be divided into four sets, namely SI 0, SI 1, SI 2 and SI 3, which will not be specifically limited herein.

It should be appreciated that a slice-based bit index routing table is a table that is mapped from a forwarding router identifier of the bit forwarding egress router to a BFR-prefix of the bit forwarding egress router within a specific slice, and mapped to a BFR-NBR on a path reaching the bit forwarding egress router. Therefore, the slice-based bit index routing table describes a corresponding relationship between the BFR-prefix and the BFR-NBR within the specific slice, which may be configured to generate a BIER forwarding table.

In an embodiment, bit index routing tables with the same SI and the same BFR-NBR within a specific slice may be integrated to obtain a slice-based bit index forwarding table, and a mapping relationship between an F-BM and the BFR-NBR within the slice may be established using the bit index forwarding table, where the F-BM represents a set of BIER domain edge nodes that may be reached through the BFR-NBR when replicating and sending a packet to the next hop BFR-NBR. In addition, in the bit index explicit replication network domain, each bit forwarding egress router corresponds to a bit position, the bit position being globally unique in a BIER sub-domain within a specific slice. The bit positions of all bit forwarding egress routers form a bit string, and the transmission and routing of a BIER packet within the slice in the bit index explicit replication network domain depend on the bit string. When receiving a BIER packet header containing BIER information and/or a target network resource partition identifier, other bit forwarding routers forward the BIER packet using the slice-based bit index forwarding table.

In this embodiment, by using the bit index routing table establishment method including the above-mentioned step S210, a bit forwarding router may advertise mapping information in a bit index explicit replication network domain, such that a bit forwarding router in the bit index explicit replication network domain establishes a bit index routing table corresponding to a target network resource partition identifier according to the mapping information, where the mapping information is configured to characterize a mapping relationship between target identifier information and the target network resource partition identifier, and the bit forwarding router forwards a packet on the basis of a bit index forwarding table having slice granularity. Therefore, according to the embodiment of the present disclosure, data may be transmitted in the form of slices in a BIER network.

In an embodiment, the mapping information may be advertised by the bit forwarding router in the bit index explicit replication network domain through a first router advertisement message, where the first router advertisement message may be an ISIS-based router advertisement message, may be an OSPF-based router advertisement message, or may be a BGP-based router advertisement message. When a target protocol type is an OSPF type, the target protocol type may be an OSPFv2 or may be an OSPFv3, which will not be specifically limited herein.

In an embodiment, when the first router advertisement message is an ISIS-based router advertisement message, the first router advertisement message includes an NRP BIER Info-Sub-TLV, the mapping information is carried in the NRP BIER Info-Sub-TLV, and the NRP BIER Info-Sub-TLV is borne in an ISIS prefix-reachability TLV. For example, as shown in Fig. 2, Fig. 2 is a schematic diagram of a first router advertisement message, and the mapping information in this embodiment refers to a mapping relationship between the BFR-id and the target network resource partition identifier NRP-ID, where the field length of each of Type, Length, BAR, IPA and Sub-Domain-ID may be 1 byte (i.e. 8 bits), the field length of BFR-id may be 2 bytes, the field length of NRP-ID may be 4 bytes, 3 bytes or 1 byte, and the field length of sub-sub-TLVs is a variable length. In addition, the field meanings of all fields in Fig. 2 are as shown in Table 1, where the BIER encapsulation types may be Multi-Protocol Label Switching (MPLS) types, non-MPLS types, or other encapsulation types, the type of sub-sub-TLVs may be an NRP BIER Info-Sub-TLV, and the NRP-ID may be any one of a slice-identifier, a slice aggregation-identifier, a network resource partition identifier, a multi-topology-identifier or a flexible algorithm-identifier.

In another embodiment, when the first router advertisement message is an ISIS-based router advertisement message, the first router advertisement message includes a BIER Info-Sub-TLV, and the mapping information is carried in the BIER Info-Sub-TLV. Specifically, in this embodiment, the mapping information refers to a mapping relationship between the BIFT ID and/or the bit forwarding router-identifier and/or the bit index explicit replication sub-domain-identifier and the target network resource partition identifier. The first router advertisement message further includes an NRP Sub-sub-TLV, the target network resource partition identifier is carried in the NRP Sub-sub-TLV, the NRP Sub-sub-TLV is borne in a BIER Info-Sub-TLV, and the BIFT ID and/or the bit forwarding router-identifier and/or the bit index explicit replication sub-domain-identifier are carried in the BIER Info-Sub-TLV. For example, as shown in Fig. 3, Fig. 3 is a schematic diagram of another first router advertisement message, where Type is To Be Defined (TBD), the field length of each of Type and Length may be 2 bytes (i.e., 16 bits), and the field length of NRP-ID may be 4 bytes, 3 bytes, or 1 byte. In addition, the field meanings of Type, Length and NRP-ID are as shown in Table 1, where the target network resource partition identifier NRP-ID may be any one of a slice-identifier, a slice aggregation-identifier, a network resource partition identifier, a multi-topology-identifier or a flexible algorithm-identifier.

Based on the above embodiments, in an embodiment, if slice-identifiers are allocated based on each BIFT-ID, then in a BIER-MPLS encapsulation scenario, when the first router advertisement message is an ISIS-based router advertisement message, the first router advertisement message may include an NRP sub-sub-sub-TLV, the target network resource partition identifier is carried in the NRP sub-sub-sub-TLV, the NRP sub-sub-sub-TLV is borne in a sub-sub-sub-TLV, and the sub-sub-sub-TLV is borne in a BIER MPLS Encapsulation Extended Sub-sub-TLV, where the target network resource partition identifier NRP-ID may be any one of a slice-identifier, a slice aggregation-identifier, a network resource partition identifier, a multi-topology-identifier or a flexible algorithm-identifier.

In another embodiment, taking the allocation of slice-identifiers based on each BIFT-ID as an example, in a BIER-non-MPLS encapsulation scenario, when the first router advertisement message is an ISIS-based router advertisement message, the first router advertisement message may include an NRP sub-sub-sub-TLV, the target network resource partition identifier is carried in the NRP sub-sub-sub-TLV, the NRP sub-sub-sub-TLV is borne in a sub-sub-sub-TLV, and the sub-sub-sub-TLV is borne in an IS-IS BIER non-MPLS Encapsulation Sub-sub TLV, where the target network resource partition identifier NRP-ID may be any one of a slice-identifier, a slice aggregation-identifier, a network resource partition identifier, a multi-topology-identifier or a flexible algorithm-identifier.

In an embodiment, when the first router advertisement message is an OSPF-based router advertisement message, the first router advertisement message may include an NRP BIER Sub-TLV, and the mapping information is carried in the NRP BIER Sub-TLV, where when the OSPF protocol is an OSPFv2 protocol, the NRP BIER Sub-TLV may be borne in an OSPFv2 Extended Prefix TLV, and when the OSPF protocol is an OSPFv3 protocol, the NRP BIER Sub-TLV may be borne in an Intra-Area-Prefix TLV or an Inter-Area-Prefix TLV; alternatively, the first router advertisement message includes an NRP Sub-TLV, and the mapping information is carried in the NRP Sub-TLV. For example, as shown in Fig. 4, Fig. 4 is a schematic diagram of another first router advertisement message, where Reserved represents a reserved field used for byte alignment; MT-ID represents a multi-topology-identifier, where each BIER sub-domain must be associated with one and only one OSPF topology identified by MT-ID; Sub-TLVs represent different BIER encapsulation types, and a Sub-TLV of one BIER may carry a plurality of different sub-sub-TLVs. The field meanings of other fields are as shown in Table 1. In addition, the target network resource partition identifier NRP-ID may be any one of a slice-identifier, a slice aggregation-identifier, a network resource partition identifier, a multi-topology-identifier or a flexible algorithm-identifier.

In another embodiment, when the first router advertisement message is an OSPF-based router advertisement message, the first router advertisement message includes a BIER Sub-TLV, and the mapping information is carried in the BIER Sub-TLV. In addition, the first router advertisement message includes an NRP Sub-TLV, the target network resource partition identifier is carried in the NRP Sub-TLV, and the NRP Sub-TLV is borne in a BIER Sub-TLV, where the target network resource partition identifier may be any one of a slice-identifier, a slice aggregation-identifier, a network resource partition identifier, a multi-topology-identifier or a flexible algorithm-identifier.

In an embodiment, taking the allocation of slice-identifiers based on each BIFT-ID as an example, in a BIER-MPLS encapsulation scenario, when the first router advertisement message is an OSPF-based router advertisement message, the first router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER MPLS Encapsulation Sub-TLV, where the target network resource partition identifier may be any one of a slice-identifier, a slice aggregation-identifier, a network resource partition identifier, a multi-topology-identifier or a flexible algorithm-identifier.

In another embodiment, taking the allocation of slice-identifiers based on each BIFT-ID as an example, in a BIER-non-MPLS encapsulation scenario, when the first router advertisement message is an OSPF-based router advertisement message, the first router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in an OSPFv2/OSPFv3 BIER non-MPLS Encapsulation Sub-TLV, where the target network resource partition identifier may be any one of a slice-identifier, a slice aggregation-identifier, a network resource partition identifier, a multi-topology-identifier or a flexible algorithm-identifier.

In an embodiment, when the first router advertisement message is a BGP-based router advertisement message, the first router advertisement message includes a BIER TLV, and the mapping information is carried in the BIER TLV. Specifically, the first router advertisement message includes a target network resource partition identifier and an NRP Sub-TLV, the target network resource partition identifier is carried in the NRP Sub-TLV, and the NRP Sub-TLV is borne in a BIER TLV, where the target network resource partition identifier may be any one of a slice-identifier, a slice aggregation-identifier, a network resource partition identifier, a multi-topology-identifier or a flexible algorithm-identifier.

In an embodiment, taking the allocation of slice-identifiers based on each BIFT-ID as an example, in a BIER-MPLS encapsulation scenario, when the first router advertisement message is a BGP-based router advertisement message, the first router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER MPLS Encapsulation Sub-TLV, where the target network resource partition identifier may be any of a slice-identifier, a slice aggregation-identifier, a network resource partition identifier, a multi-topology-identifier or a flexible algorithm-identifier.

In another embodiment, taking the allocation of slice-identifiers based on each BIFT-ID as an example, in a BIER-non-MPLS encapsulation scenario, when the first router advertisement message is a BGP-based router advertisement message, the first router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER non-MPLS Encapsulation sub-TLV, where the target network resource partition identifier may be any one of a slice-identifier, a slice aggregation-identifier, a network resource partition identifier, a multi-topology-identifier or a flexible algorithm-identifier.

In an embodiment, when the bit index explicit replication network domain is a BIER-TE network domain, the mapping information may be advertised by the bit forwarding router in the BIER-TE network domain through a second router advertisement message, where BIER-TE may be BIET tree engineering or BIER traffic engineering; the second router advertisement message may be an ISIS-based router advertisement message, may be an OSPF-based router advertisement message, or may be a BGP-based router advertisement message. When a target protocol type is an OSPF type, the target protocol type may be an OSPFv2 or may be an OSPFv3, which will not be specifically limited herein.

In an embodiment, when the second router advertisement message is an ISIS-based router advertisement message, the second router advertisement message includes a BIER-TE Info Sub-TLV, and the mapping information is carried in the BIER-TE Info Sub-TLV. If slice-identifiers are allocated based on each BIFT-ID, then in a BIER-MPLS encapsulation scenario, the second router advertisement message includes an NRP sub-sub-sub-TLV, the target network resource partition identifier is carried in the NRP sub-sub-sub-TLV, the NRP sub-sub-sub-TLV is borne in a sub-sub-sub-TLV, and the sub-sub-sub-TLV is borne in a BIER-TE MPLS Encapsulation Extended Sub-sub-TLV; and if slice-identifiers are allocated based on each BIFT-ID, then in a BIER-non-MPLS encapsulation scenario, the second router advertisement message includes an NRP sub-sub-sub-TLV, the target network resource partition identifier is carried in the NRP sub-sub-sub-TLV, the NRP sub-sub-sub-TLV is borne in a sub-sub-sub-TLV, and the sub-sub-sub-TLV is borne in an IS-IS BIER-TE non-MPLS Encapsulation Sub-sub TLV, where the target network resource partition identifier may be any one of a slice-identifier, a slice aggregation-identifier, a network resource partition identifier, a multi-topology-identifier or a flexible algorithm-identifier.

In another embodiment, when the second router advertisement message is an ISIS-based router advertisement message, the second router advertisement message includes a BIER-TE Info Sub-TLV, and the mapping information is carried in the BIER-TE Info Sub-TLV. In addition, the second router advertisement message further includes an NRP sub-sub-TLV and a target network resource partition identifier, the target network resource partition identifier is carried in the NRP sub-sub-TLV, and the NRP sub-sub-TLV is borne in a BIER-TE Info Sub-TLV, where the target network resource partition identifier may be any one of a slice-identifier, a slice aggregation-identifier, a network resource partition identifier, a multi-topology-identifier or a flexible algorithm-identifier.

In an embodiment, when the second router advertisement message is an OSPF-based router advertisement message, the second router advertisement message includes a BIER-TE Sub-TLV, and the mapping information is carried in the BIER-TE Sub-TLV. If slice-identifiers are allocated based on each BIFT-ID, then in a BIER-MPLS encapsulation scenario, the second router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER-TE MPLS Encapsulation Sub-TLV; and if slice-identifiers are allocated based on each BIFT-ID, then in a BIER-non-MPLS encapsulation scenario, the second router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in an OSPFv2/OSPFv3 BIER-TE non-MPLS Encapsulation Sub-TLV, where the target network resource partition identifier may be any one of a slice-identifier, a slice aggregation-identifier, a network resource partition identifier, a multi-topology-identifier or a flexible algorithm-identifier.

In another embodiment, when the second router advertisement message is an OSPF-based router advertisement message, the second router advertisement message includes a BIER-TE Sub-TLV, and the mapping information is carried in the BIER-TE Sub-TLV. Specifically, the second router advertisement message further includes an NRP sub-sub-sub-TLV and a target network resource partition identifier, the target network resource partition identifier is carried in the NRP sub-sub-sub-TLV, the NRP sub-sub-sub-TLV is borne in a sub-sub-sub-TLV, and the sub-sub-sub-TLV is borne in a BIER-TE Sub-TLV, where the target network resource partition identifier may be any one of a slice-identifier, a slice aggregation-identifier, a network resource partition identifier, a multi-topology-identifier or a flexible algorithm-identifier.

In an embodiment, when the second router advertisement message is a BGP-based router advertisement message, the second router advertisement message includes a BIER-TE TLV, and the mapping information is carried in the BIER-TE TLV. If slice-identifiers are allocated based on each BIFT-ID, in a BIER-MPLS encapsulation scenario, the second router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER MPLS Encapsulation Sub-TLV; and if slice-identifiers are allocated based on each BIFT-ID, in a BIER-non-MPLS encapsulation scenario, the second router advertisement message includes an NRP sub-sub-TLV, the target network resource partition identifier is carried in the NRP sub-sub-TLV, the NRP sub-sub-TLV is borne in a sub-sub-TLV, and the sub-sub-TLV is borne in a BIER non-MPLS Encapsulation Sub-TLV, where the target network resource partition identifier may be any one of a slice-identifier, a slice aggregation-identifier, a network resource partition identifier, a multi-topology-identifier or a flexible algorithm-identifier.

In another embodiment, when the second router advertisement message is a BGP-based router advertisement message, the second router advertisement message includes a BIER-TE TLV, and the mapping information is carried in the BIER-TE TLV. Specifically, the second router advertisement message may further include an NRP sub-TLV and a target network resource partition identifier, the target network resource partition identifier is carried in the NRP sub-TLV, and the NRP sub-TLV is borne in a BIER-TE TLV, where the target network resource partition identifier may be any one of a slice-identifier, a slice aggregation-identifier, a network resource partition identifier, a multi-topology-identifier or a flexible algorithm-identifier.

The bit index routing table establishment method provided by the above embodiment will be described in detail below with specific examples.

### Example I

In an embodiment, the target identifier information as a bit forwarding router-identifier is taken as an example. In a scenario where slicing is implemented using an IGP flexible algorithm, mapping information about a bit forwarding router-identifier and a flexible algorithm-identifier is advertised through a first router advertisement message in a bit index explicit replication network domain between different bit forwarding routers, and a bit index routing table corresponding to a target network resource partition identifier is established according to the mapping information. Prior to this, each bit forwarding egress router needs to allocate bit forwarding router-identifiers to different Flex-algorithm planes. As shown in Fig. 6, a network to which bit forwarding routers gBFR1, gBFR2, gBFR3, and gBFR4 is connected is classified as a first Flex-algorithm plane, and a network to which rBFR1, rBFR2, rBFR3, and rBFR4 is connected is classified as a second Flex-algorithm plane. A bit forwarding egress router (BFER) allocates a first bit forwarding router-identifier 0001 to the first Flex-algorithm plane, and allocates a second bit forwarding router-identifier 0010 to the second Flex-algorithm plane, thereby achieving topology and resource isolation. The first router advertisement message may be an ISIS-based router advertisement message, may be an OSPF-based router advertisement message, or may be a BGP-based router advertisement message, which will not be specifically limited herein. In addition, in a scenario where slicing is implemented using an IGP flexible algorithm, the first router advertisement message includes a target network resource partition identifier, and the target network resource partition identifier is a flexible algorithm-identifier, which only requires 1 byte.

### Example II

In an embodiment, the target identifier information as a bit index explicit replication sub-domain-identifier or a Bit Index Forwarding Table-Identifier (BIFT-ID) is taken as an example, where the bit index explicit replication sub-domain-identifier may be a Bit Index Explicit Replication Multi-Protocol Label Switching label (BIER-MPLS label). In a BIER-MPLS network, the BIFT-ID may also be called BIER-MPLS label, and the BIFT-ID is used in a non-BIER-MPLS network. In a scenario where slicing is implemented using an IGP flexible algorithm, mapping information about a BIFT-ID and a flexible algorithm-identifier is advertised through a first router advertisement message in a bit index explicit replication network domain between different bit forwarding routers, and a bit index routing table corresponding to a target network resource partition identifier is established according to the mapping information. Prior to this, each bit forwarding egress router allocates different BIER-MPLS labels or BIFT-IDs to different Flex-algorithm planes. As shown in Fig. 6, a network to which bit forwarding routers gBFR1, gBFR2, gBFR3, and gBFR4 is connected is classified as a first Flex-algorithm plane, and a network to which rBFR1, rBFR2, rBFR3, and rBFR4 is connected is classified as a second Flex-algorithm plane. A bit forwarding egress router allocates a label 1 or a BIFT-ID1 to the first Flex-algorithm plane, and allocates a label 2 or a BIFT-ID2 to the second Flex-algorithm plane, thereby achieving topology and resource isolation. In addition, BIER supports MPLS encapsulation and non-MPLS encapsulation.

In a feasible implementation, the first router advertisement message may be an ISIS-based router advertisement message, may be an OSPF-based router advertisement message, or may be a BGP-based router advertisement message, which will not be specifically limited herein. Moreover, in a scenario where slicing is implemented using an IGP flexible algorithm, the first router advertisement message includes a target network resource partition identifier, and the target network resource partition identifier is a flexible algorithm-identifier, which only requires 1 byte.

### Example III

In an embodiment, the target identifier information as a bit index explicit replication sub-domain-identifier or a Bit Index Forwarding Table-Identifier (i.e., BIFT-ID) is taken as an example, where the bit index explicit replication sub-domain-identifier may be a Bit Index Explicit Replication Multi-Protocol Label Switching label (BIER-MPLS label). In a BIER-MPLS network, the BIFT-ID may also be called BIER-MPLS label. In a scenario where slicing is implemented using slice aggregation, mapping information about a BIFT-ID and an NRP-ID is advertised through a first router advertisement message in a BIER-TE network domain between different bit forwarding routers, and a bit index routing table corresponding to a target network resource partition identifier is established according to the mapping information. Prior to this, each bit forwarding router allocates different BIER-MPLS labels or BIFT-IDs to different slices. For example, as shown in Fig. 6, a network to which bit forwarding routers gBFR1, gBFR2, gBFR3 and gBFR4 is connected is classified as an NRP-ID1 network, and a network to which rBFR1, rBFR2, rBFR3 and rBFR4 is connected is classified as an NRP-ID2 network. The bit forwarding router allocates a label 1 or a BIFT-ID1 to the first slice, and allocates a label 2 or a BIFT-ID2 to the second slice, thereby achieving topology and resource isolation.

In a feasible implementation, the first router advertisement message may be an ISIS-based router advertisement message, may be an OSPF-based router advertisement message, or may be a BGP-based router advertisement message, which will not be specifically limited herein. Moreover, in a scenario where slicing is implemented using slice aggregation, the first router advertisement message includes a target network resource partition identifier, and the target network resource partition identifier is a slice aggregation-identifier.

### Example IV

In an embodiment, the target identifier information as a BIER-based bit position is taken as an example. In a scenario where slicing is implemented using slice aggregation, mapping information is advertised through a first router advertisement message in a BIER-TE network domain between different bit forwarding routers, and a bit index routing table corresponding to a target network resource partition identifier is established according to the mapping information. Prior to this, each bit forwarding router allocates different bit positions to different slices. For example, as shown in Fig. 6, a network where bit forwarding routers gBFR1, gBFR2, gBFR3, and gBFR4 are located is classified as an NRP-ID1 network, and a network where rBFR1, rBFR2, rBFR3, and rBFR4 are located is classified as an NRP-ID2 network. The bit forwarding router allocates a Bit Position 1 to the first slice, and allocates a Bit Position 2 to the second slice, thereby achieving topology and resource isolation.

In a feasible implementation, the first router advertisement message may be an ISIS-based router advertisement message, may be an OSPF-based router advertisement message, or may be a BGP-based router advertisement message, which will not be specifically limited herein. Moreover, in a scenario where slicing is implemented using slice aggregation, the first router advertisement message includes a target network resource partition identifier, and the target network resource partition identifier is a slice aggregation-identifier.

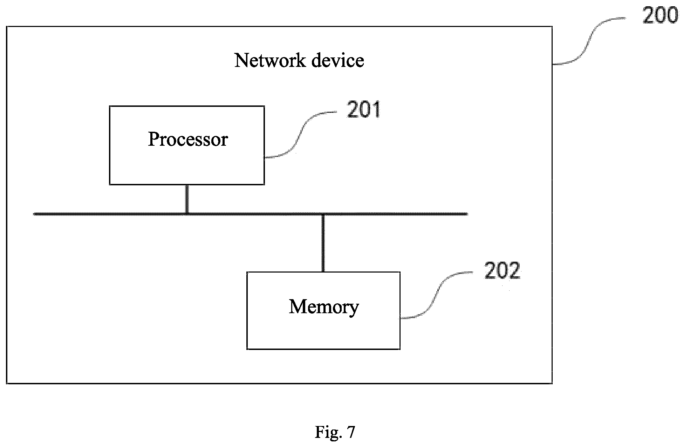

In addition, referring to Fig. 7, an embodiment of the present disclosure further provides a network device. The network device 200 includes a memory 202, a processor 201, and a computer program stored in the memory 202 and runnable on the processor 201.

The processor 201 and the memory 202 may be connected via a bus or in other means.

The memory 202, as a non-transitory computer-readable storage medium, may be configured to store non-transitory software programs and non-transitory computer-executable programs. In addition, the memory 202 may include a high-speed random access memory, and may further include a non-transitory memory, such as at least one disk storage device, flash memory device, or other non-transitory solid-state storage devices. In some implementations, the memory 202 may optionally include memories remotely located relative to the processor 201. These remote memories may be connected to the processor 201 via a network. Examples of the above-mentioned network include, but are not limited to, the Internet, an intranet, a local area network, a mobile communication network and a combination thereof.

The non-transitory software programs and instructions required to implement the bit index routing table establishment method in the above embodiment are stored in the memory 202, which, when executed by the processor 201, cause the processor to perform the bit index routing table establishment method in the above embodiment, for example, perform the method steps S110 to S120 in Fig. 1 and the method step S210 in Fig. 5 as described above.

The device embodiments described above are merely illustrative, where the units described as separate components may be or may not be physically separated, that is, may be located in a single place, or may be distributed onto a plurality of network units. Some or all of the modules may be selected according to actual needs to achieve the purpose of the scheme of this embodiment.

In addition, an embodiment of the present disclosure further provides a computer-readable storage medium storing computer-executable instructions, where the computer-executable instructions are executed by a processor or controller, to for example, perform the method steps S110 to S120 in Fig. 1 and the method step S210 in Fig. 5 as described above.

In addition, an embodiment of the present disclosure further provides a computer program product, including computer programs or computer instructions, where the computer programs or computer instructions are stored in a computer-readable storage medium, a processor of a computer device reads the computer programs or computer instructions from the computer-readable storage medium, and the processor executes the computer programs or computer instructions, to cause the computer device to perform the bit index routing table establishment method in the above embodiment, for example, perform the method steps S110 to S120 in Fig. 1 and the method step S210 in Fig. 5 as described above.

Those of ordinary skill in the art will appreciate that all or some of the steps and systems in the methods disclosed above may be implemented as software, firmware, hardware, or a suitable combination thereof. Some or all of the physical components may be implemented as software performed by a processor, such as a central processor, a digital signal processor or a microprocessor, or as hardware, or as an integrated circuit, such as an application specific integrated circuit. Such software may be distributed on computer-readable media, which may include computer storage media (or non-transitory media) and communication media (or transitory media). As is known to those of ordinary skill in the art, the term "computer storage medium" includes volatile and nonvolatile, removable and non-removable media implemented in any method or technology for storage of information such as computer-readable instructions, data structures, program modules or other data. The computer storage medium includes, but is not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage devices, or any other medium that may be used to store the desired information and may be accessed by a computer. Furthermore, it is well known to those of ordinary skill in the art that communication media typically contain computer-readable instructions, data structures, program modules, or other data in modulated data signals such as carriers or other transport mechanisms, and may include any information delivery media.

## Claims

1. A bit index routing table establishment method, comprising:
receiving mapping information advertised by a bit forwarding router in a bit index explicit replication network domain, wherein the mapping information is configured to characterize a mapping relationship between target identifier information and a target network resource partition identifier; and
establishing a bit index routing table corresponding to the target network resource partition identifier according to the mapping information.

2. The bit index routing table establishment method according to claim 1, wherein the target identifier information comprises one selected form a group consisting of:
a bit forwarding router-identifier;
a bit index forwarding table-identifier; and
a bit index explicit replication sub-domain-identifier.

3. The bit index routing table establishment method according to claim 1, wherein the bit index explicit replication network domain is a Bit Index Explicit Replication-Traffic Engineering (BIER-TE) network domain, and the target identifier information comprises one selected form a group consisting of:
a bit index forwarding table-identifier;
a bit index explicit replication sub-domain-identifier; and
a bit position.

4. The bit index routing table establishment method according to claim 1, wherein the mapping information is advertised by the bit forwarding router in the bit index explicit replication network domain through a first router advertisement message.

5. The bit index routing table establishment method according to claim 4, wherein the first router advertisement message is one selected form a group consisting of:
an Intermediate System to Intermediate System (ISIS)-based router advertisement message;
an Open Shortest Path First (OSPF)-based router advertisement message; and
a Border Gateway Protocol (BGP)-based router advertisement message.

6. The bit index routing table establishment method according to claim 5, wherein:
in a case where the first router advertisement message is an ISIS-based router advertisement message, the first router advertisement message comprises an NRP BIER Info-Sub-TLV, and the mapping information is carried in the NRP BIER Info-Sub-TLV; or
in a case where the first router advertisement message is an ISIS-based router advertisement message, the first router advertisement message comprises a BIER Info-Sub-TLV, and the mapping information is carried in the BIER Info-Sub-TLV.

7. The bit index routing table establishment method according to claim 5, wherein:
in a case where the first router advertisement message is an OSPF-based router advertisement message, the first router advertisement message comprises an NRP BIER Sub-TLV, and the mapping information is carried in the NRP BIER Sub-TLV; or
in a case where the first router advertisement message is an OSPF-based router advertisement message, the first router advertisement message comprises a BIER Sub-TLV, and the mapping information is carried in the BIER Sub-TLV.

8. The bit index routing table establishment method according to claim 5, wherein:
in a case where the first router advertisement message is a BGP-based router advertisement message, the first router advertisement message comprises a BIER TLV, and the mapping information is carried in the BIER TLV.

9. The bit index routing table establishment method according to claim 1, wherein the bit index explicit replication network domain is a BIER-TE network domain, and the mapping information is advertised by the bit forwarding router in the BIER-TE network domain through a second router advertisement message.

10. The bit index routing table establishment method according to claim 9, wherein the second router advertisement message is one selected form a group consisting of:
an ISIS-based router advertisement message;
an OSPF-based router advertisement message; and
a BGP-based router advertisement message.

11. The bit index routing table establishment method according to claim 10, wherein:
in a case where the second router advertisement message is an ISIS-based router advertisement message, the second router advertisement message comprises a BIER-TE Info Sub-TLV, and the mapping information is carried in the BIER-TE Info Sub-TLV; or
in a case where the second router advertisement message is an OSPF-based router advertisement message, the second router advertisement message comprises a BIER-TE Sub-TLV, and the mapping information is carried in the BIER-TE Sub-TLV; or
in a case where the second router advertisement message is a BGP-based router advertisement message, the second router advertisement message comprises a BIER-TE TLV, and the mapping information is carried in the BIER-TE TLV.

12. The bit index routing table establishment method according to claim 1, wherein the target network resource partition identifier comprises one selected form a group consisting of:
a slice-identifier;
a slice aggregation-identifier;
a network resource partition identifier;
a multi-topology-identifier; and
a flexible algorithm-identifier.

13. A bit index routing table establishment method, comprising:
advertising mapping information in a bit index explicit replication network domain, such that a bit forwarding router in the bit index explicit replication network domain establishes a bit index routing table corresponding to a target network resource partition identifier according to the mapping information, wherein the mapping information is configured to characterize a mapping relationship between target identifier information and the target network resource partition identifier.

14. The bit index routing table establishment method according to claim 13, wherein the target identifier information comprises one selected form a group consisting of:
a bit forwarding router-identifier;
a bit index forwarding table-identifier; and
a bit index explicit replication sub-domain-identifier.

15. The bit index routing table establishment method according to claim 13, wherein the bit index explicit replication network domain is a BIER-TE network domain, and the target identifier information comprises one selected form a group consisting of:
a bit index forwarding table-identifier;
a bit index explicit replication sub-domain-identifier; and
a bit position.

16. The bit index routing table establishment method according to claim 13, wherein the mapping information is advertised by the bit forwarding router in the bit index explicit replication network domain through a first router advertisement message.

17. The bit index routing table establishment method according to claim 16, wherein the first router advertisement message is one selected from a group consisting of:
an ISIS-based router advertisement message;
an OSPF-based router advertisement message; and
a BGP-based router advertisement message.

18. The bit index routing table establishment method according to claim 17, wherein:
in a case where the first router advertisement message is an ISIS-based router advertisement message, the first router advertisement message comprises an NRP BIER Info-Sub-TLV, and the mapping information is carried in the NRP BIER Info-Sub-TLV; or
in a case where the first router advertisement message is an ISIS-based router advertisement message, the first router advertisement message comprises a BIER Info-Sub-TLV, and the mapping information is carried in the BIER Info-Sub-TLV.

19. The bit index routing table establishment method according to claim 17, wherein,
in a case where the first router advertisement message is an OSPF-based router advertisement message, the first router advertisement message comprises an NRP BIER Sub-TLV, and the mapping information is carried in the NRP BIER Sub-TLV; or
in a case where the first router advertisement message is an OSPF-based router advertisement message, the first router advertisement message comprises a BIER Sub-TLV, and the mapping information is carried in the BIER Sub-TLV.

20. The bit index routing table establishment method according to claim 17, wherein:
in a case where the first router advertisement message is a BGP-based router advertisement message, the first router advertisement message comprises a BIER TLV, and the mapping information is carried in the BIER TLV.

21. The bit index routing table establishment method according to claim 13, wherein the bit index explicit replication network domain is a BIER-TE network domain, and the mapping information is advertised by the bit forwarding router in the BIER-TE network domain through a second router advertisement message.

22. The bit index routing table establishment method according to claim 21, wherein the second router advertisement message is one selected from a group consisting of:
an ISIS-based router advertisement message;
an OSPF-based router advertisement message; and
a BGP-based router advertisement message.

23. The bit index routing table establishment method according to claim 22, wherein,
in a case where the second router advertisement message is an ISIS-based router advertisement message, the second router advertisement message comprises a BIER-TE Info Sub-TLV, and the mapping information is carried in the BIER-TE Info Sub-TLV; or
in a case where the second router advertisement message is an OSPF-based router advertisement message, the second router advertisement message comprises a BIER-TE Sub-TLV, and the mapping information is carried in the BIER-TE Sub-TLV; or
in a case where the second router advertisement message is a BGP-based router advertisement message, the second router advertisement message comprises a BIER-TE TLV, and the mapping information is carried in the BIER-TE TLV.

24. The bit index routing table establishment method according to claim 13, wherein the target network resource partition identifier comprises one selected from a group consisting of:
a slice-identifier;
a slice aggregation-identifier;
a network resource partition identifier;
a multi-topology-identifier; and
a flexible algorithm-identifier.

25. A network device, comprising a memory, a processor, and computer program stored in the memory and runnable on the processor, wherein the processor is configured to, when executing the computer program, implement the bit index routing table establishment method according to any one of claims 1 to 24.

26. A computer-readable storage medium, storing computer-executable instructions configured to execute the bit index routing table establishment method according to any one of claims 1 to 24.
